# DEMANDE DE BREVET EUROPEEN

(11) **EP 0 980 044 A1**
(43) Date de publication de la demande: **16.02.2000**
(21) Numéro de dépôt: 99401963.6
(22) Date de dépôt: 02.08.1999
(51) Int. Cl.: G06F 17/30

(54) **Document multimédia dynamique**

(30) Priorité: 13.08.1998 FR 9809916
(71) Demandeur: ALCATEL, 75008 Paris (FR)
(72) Inventeur: Fouquet, Guy, 91620 Nozay (FR); Martineau, Olivier, 91450 Soisy/Seine (FR)
(74) Mandataire: Lamoureux, Bernard

(57) **Abrégé**

L'invention a pour objet un procédé pour représenter de façon dynamique un document multimédia décrit en un langage de description. L'invention a pour autre objet le document multimédia lui-même. Elle se base sur l'utilisation de formalismes de type ECA, et ne nécessite pas l'utilisation de codes compilés (par exemple en Java) comme c'est le cas dans l'état de la technique.

## Description

L'invention concerne les documents multimédias qui sont implantés dans des systèmes de traitement de données.

Il est connu de considérer un document multimédia sous la forme d'un ensemble d'objets d'un programme objets implanté dans un système de traitement de données, comme en attestent notamment les publications relatives aux travaux effectués par le "Multimedia/Hypermedia Expert Group" en vue de définir la norme internationale MHEG.

Ceci permet en effet une unification de la prise en compte des objets, éventuellement très différents, qu'est susceptible de comporter un document multimédia et en particulier des aspects dynamiques de ce document.

On peut en effet vouloir apporter des aspects dynamiques à un document multimédia, c'est-à-dire que le comportement des éléments le composant évolue en fonction d'événements (par exemple, un événement temporel basé sur une horloge).

En outre, le document multimédia peut devoir être interactif, c'est-à-dire que le comportement des éléments le composant évolue en fonction d'événements issus d'un utilisateur. Il découle de ces définitions qu'un document multimédia dit interactif est a *fortiori* dynamique.

Actuellement, afin de posséder des propriétés dynamiques (et, a *fortiori* interactives), un document multimédia ne peut être conçu et réalisé que par un programmeur, dès que la conduite à prévoir dépasse un niveau élémentaire.

Un tel niveau élémentaire correspond par exemple à celui qui est exprimé par la notion de balise, c'est-à-dire à celui d'une instruction de type GOTO où la destination est donnée dans le document lui-même et où la prise en compte s'effectue classiquement au niveau d'un navigateur, tel que NETSCAPE ou INTERNET EXPLORER version 4.

Une solution existante pour rendre un document multimédia dynamique est décrite dans l'article "Synchronization *Attributes and Rules of Active Object-Oriented Database for Multimedia Presentation"* de Seok Jae Yun et Woo Saeng Kim, paru dans "*Database systems for advanced applications '95. Proceedings* of *the fourth international conference on database systems for* advanced *applications,* Singapour, ISBN 981-02-2220-3. Cet article décrit une méthode pour réaliser un document multimédia dynamique, c'est-à-dire gérant l'évolution éventuelle des éléments composant le document multimédia en fonction d'événements de type temporel. La méthode consiste à mettre en oeuvre le document multimédia sous la forme d'un programme orienté objets (au sens de la programmation orientée objets). À chaque objet est associé un élément du document, et à chaque attribut d'un objet un statut de l'élément concerné (couleur, vitesse de déroulement d'une animation, etc.).

Par ailleurs, l'article enseigne d'associer à ces attributs un formalisme de type événement-condition-action, dit ECA.

Toutefois, vu les besoins engendrés par le développement des communications par l'intermédiaire des réseaux de communication de type Internet et Intranet, la nécessité d'utiliser un spécialiste en matière de programmation pour établir un document multimédia, dès le niveau élémentaire évoqué ci-dessus, ne peut rester longtemps acceptable, car engendrant un coût prohibitif pour les usagers des réseaux de communication désirant mettre des documents multimédias dynamiques à disposition du public.

De surcroît, une telle technologie s'adapte mal à de tels réseaux de communication. En effet, de tels réseaux permettent l'interconnexion de systèmes de traitement de données hétérogènes. Parmi ceux-ci, on peut trouver des systèmes possédant des particularités en ce qui concerne la présentation de documents multimédias, et notamment des limites pour les aspects dynamiques et/ou interactifs. On peut par exemple citer le cas d'un terminal passif ne possédant pas de moyen d'interaction (comme un clavier, une souris etc.) et ne pouvant donc pas mettre en oeuvre les aspects interactifs d'un tel document multimédia.

La solution décrite dans l'article en question ne permet pas facilement d'adapter la représentation du document aux particularités du système de traitement de données puisque le programme orienté objets, une fois compilé, ne peut plus être modifié.

Pour résoudre ces problèmes, l'invention a pour premier objet un procédé pour représenter de façon dynamique un document multimédia, sur un système de traitement de données, par un module logiciel, ledit document multimédia comportant un ensemble hiérarchisé d'éléments comportant eux-mêmes des attributs, au moins un desdits attributs étant associé à un formalisme (ou lien) de type événement-condition-action, dit ECA, caractérisé en ce que ledit procédé comporte les étapes ordonnées suivantes :
- description dudit document multimédia en un langage de description,
- interprétation dudit document multimédia par ledit module logiciel, lesdits formalismes ECA étant dynamiquement interprétés, afin de permettre l'évolution de la représentation dudit document multimédia par la réalisation d'actions en fonction d'événements et de conditions.

L'invention a aussi pour objet le document multimédia lui-même, c'est-à-dire un document multimédia comportant un ensemble hiérarchisé d'éléments comportant eux-mêmes des attributs, au moins un desdits attributs étant associé à un formalisme de type événement-condition-action, dit ECA. Ce document se caractérise en ce qu'il est décrit en un langage de description, et en ce que les formalismes ECA sont décrit de façon à permettre l'interprétation par un module logiciel en vue de l'évolution de la représentation du document multimédia par la réalisation d'actions en fonction d'événements et de conditions.

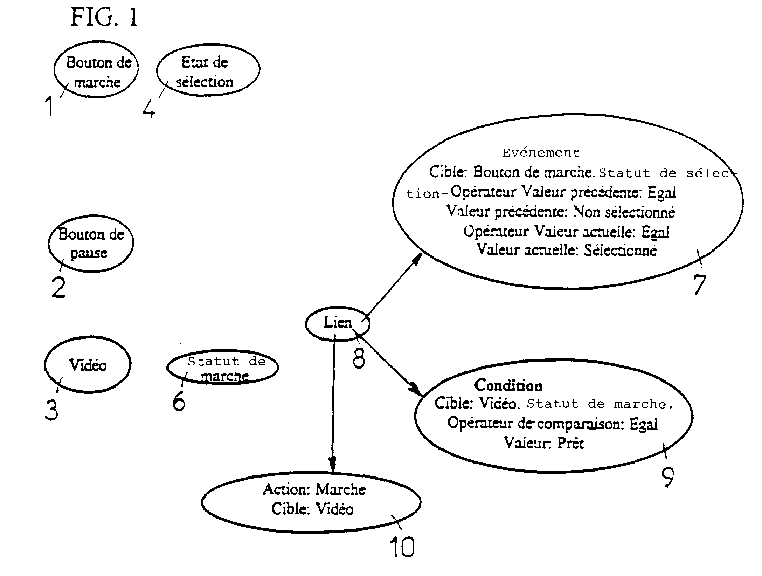

L'invention, ses caractéristiques et ses avantages sont précisés dans la description qui suit en liaison avec la figure unique qui présente, à titre d'exemple, un schéma d'un petit sous-ensemble d'éléments relatif à un document multimédia dynamique.

Comme indiqué ci-dessus, cette figure correspond à une représentation d'une partie d'un document multimédia interactif considéré sous la forme d'un ensemble d'éléments implanté dans un système de traitement de données.

Le système de traitement de données comporte au moins une unité informatique de traitement programmée qui peut éventuellement être constituée par un simple ordinateur et/ou qui peut faire partie d'un vaste ensemble où des unités peuvent communiquer entre elles au travers d'un ou de plusieurs réseaux de communication, comme connu.

Le document multimédia dynamique représenté comporte un ensemble d'éléments, affichables ou non, qui sont ici symbolisés, à titre d'exemple, par un élément graphique et donc affichable 1 intitulé bouton de marche, un élément graphique 2 intitulé bouton de pause et un élément, supposé non affichable, 3 intitulé vidéo. Il s'agit donc ici d'un document multimédia interactif (et par conséquent dynamique).

Par ailleurs, on peut organiser les éléments de façon hiérarchisée. Plus précisément, on peut définir certains éléments, appelés "éléments composés" (ou *composite, en* anglais), qui englobent un ou plusieurs éléments dits "contenus". Par exemple, les boutons référencés 1 et 2 peuvent être des éléments "contenus" qui sont englobés dans un élément "composé", qui peut être affichable ou non.

Ces divers éléments ont ici pour attributs des "statuts" qui traduisent leurs états respectifs et en conséquence celui des différentes parties du document, tel est un statut 4 traduisant l'état de sélection ou de non sélection pour l'élément bouton de marche 1 et un statut 6 caractéristique d'un état de marche ou d'arrêt pour l'élément vidéo 3.

Le passage d'un statut, tel par exemple le statut 4, d'un état faux à un état vrai ou inversement, est la conséquence de la survenance d'un événement qui est elle-même la conséquence du comportement d'un élément.

Ceci permet donc de relier les éléments entre eux par des événements qui peuvent être considérés chacun comme un changement d'état relatif à un attribut d'élément.

Ainsi dans l'exemple envisagé ci-dessus un changement de valeur de statut de l'élément 3 est par exemple conditionné par un changement de valeur de statut pour l'élément 1 qui est induit par un événement particulier. Cet événement reliant l'élément 1 à l'élément 3 est par exemple la détection d'une modification de statut pour l'attribut "sélection" de l'élément 1, lorsque ce statut passe par exemple de faux à vrai. Cet attribut "sélection" est par à exemple à vrai lorsque le bouton correspondant (ici, le bouton 1), est sélectionné par un utilisateur (par exemple par un pointeur graphique associé à une souris), et à faux dans le cas contraire.

Selon une mise en oeuvre particulière de l'invention, la détection de modification est effectuée par l'élément 1 lui-même.

Ainsi, par exemple, l'action d'un utilisateur sur un bouton "marche" de lancement d'une vidéo est considérée comme entraînant un changement de valeur pour l'élément bouton "marche" dont un attribut "sélection" passe de faux à vrai et déclenche une action de mise en marche de la vidéo. Une telle action de mise en marche suppose l'existence d'un attribut au niveau de l'élément vidéo qui est par exemple un élément "jouer" ou "tourner" et conduit à un changement de statut pour au moins cet attribut.

Il est donc possible de bâtir un scénario complexe se déroulant par pas conduisant chacun d'un élément à un autre en fonction des détections des changements de statuts qui sont successivement effectués par les éléments et qui conduisent ces derniers à agir sur d'autres au niveau desquels ils entraînent à leur tour des changements de statuts.

Toutefois la réalisation de tels changements peut être dépendante de conditions imposées dont le respect est indispensable. Ainsi dans le cas envisagé ci-dessus une condition nécessaire à la mise en marche de la vidéo est par exemple que la disponibilité d'un programme vidéo soit vérifiée.

En application de ceci, il est prévu, selon l'invention, qu'un document multimédia dynamique soit réalisé sous la forme d'un ensemble hiérarchisé d'éléments dans lequel chaque élément comporte des attributs. A chacun de ceux-ci, on peut associer un formalisme de type événement-condition-action, dit en abrégé ECA, ce dernier étant notamment connu comme étant mis en oeuvre dans le cadre d'automates industriels. L'interprétation de ces formalismes permet l'évolution de la représentation (c'est-à-dire généralement de son apparence visuelle ou auditive) du document multimédia, par la réalisation des actions déclenchées par des événements lorsque des conditions sont remplies.

Un événement est considéré, comme indiqué plus haut, comme correspondant à la détection d'un changement de valeur d'un statut relatif à un élément qui est détecté par cet élément en fonction d'un déclencheur. Un exemple de déclencheur élémentaire référencé 7 est donné sur la figure unique jointe pour la cible que constitue le bouton de marche. Comme résumé sur cette figure, les éléments pris en compte pour déterminer une sélection du bouton de marche 1 y sont :
- Cible : bouton de marche. statut de sélection
- Opérateur de valeur précédente : égal
- Valeur précédente : non sélectionné
- Opérateur de valeur courante : égal
- Valeur courante : sélectionné.

Un événement peut donc être considéré comme déterminable par une simple comparaison bornée entre une valeur précédente et une valeur courante d'un même statut.

Un événement peut notamment être lié à l'écoulement d'un temps déterminé pour un élément déterminé, à un positionnement déterminé d'un élément dans l'espace, au déroulement d'une procédure et il peut alors se traduire par un franchissement d'un seuil de valeur. Il peut aussi être le résultat d'une action externe de sélection d'élément dans l'ensemble d'éléments du document multimédia considéré.

Une condition se traduit par une expression logique combinant des valeurs courantes de statut pour des éléments déterminés de l'ensemble constituant le document multimédia considéré. Sa modélisation tient compte du fait qu'un événement n'est pas toujours suffisant à lui seul pour entraîner le déclenchement d'une action et qu'il peut donc être nécessaire de subordonner une action à la vérification préalable de servitudes déterminées. Dans de nombreux cas, la formulation d'une condition peut se traduire par une expression logique simple.

À titre d'exemple, une condition "fonctionnement" peut se réduire à une détermination de condition vrai ou faux relative aux valeurs courantes d'un premier statut de l'élément bouton de marche 1 et d'un second statut de l'élément vidéo 3.

D'une manière générale, une condition peut être décrite selon la structure simplifiée suivante qui prévoit :
- une cible constituée par le statut au niveau duquel la condition doit être vérifiée,
- un opérateur de comparaison
- une valeur de seuil déterminée pour le statut pris en compte.

A titre d'exemple et comme schématisé sur la figure, la condition élémentaire 9 traduisant le fait qu'un bouton d'arrêt d'une vidéo ne peut être sélectionné que si et seulement si a été atteint un état de préparation suffisant pour que la vidéo fonctionne, peut être simplement écrite sous la forme:
<vidéo, statut de marche, égal, fonctionnement>.

Une action se traduit par un changement notamment d'apparence ou de comportement au niveau du document multimédia qu'elle affecte, si la condition fixée à sa réalisation s'avère être vérifiée.

Toute action conduit à la modification d'un statut pour un élément et la modification de ce statut peut lui-même constituer un événement pris en compte au niveau d'un autre élément de l'ensemble que comporte un document multimédia.

Une action n'agit directement que sur un élément unique (qui peut néanmoins être éventuellement un élément "composé") de l'ensemble d'éléments propre à un document multimédia, elle se définit par exemple selon la structure simplifiée suivante qui prévoit
- une cible qui indique le statut d'élément sur lequel l'action doit être dirigée,
- une valeur qui précise la nouvelle valeur du statut d'élément ciblé.

Dans l'exemple présenté en figure, une action référencée 10 a ainsi pour cible un statut marche de l'élément vidéo et elle se développe pour une valeur dite de marche d'un niveau déterminé dont le franchissement conditionne la mise en marche d'une vidéo dans le système de traitement de données concerné.

Un lien 8 est ici prévu pour le sous-ensemble représenté sur figure unique annexé, il rassemble les événements, conditions et actions qui concernent ce sous-ensemble et il a ici une structure simplifiée dans laquelle on trouve :
- un ou plusieurs événements, référencés 7,
- une ou plusieurs conditions, référencées 9, et
- une ou plusieurs actions, référencées 10

Comme déjà indiqué plus haut, la modification d'un statut relatif à un élément d'un document multimédia selon l'invention se traduit par une action, lorsque est vérifiée une condition qui autorise cette action. Celle-ci se traduit elle-même par une modification d'un statut au niveau d'un autre élément et il est possible de considérer l'exploitation d'un ensemble d'éléments constituant un tel document multimédia comme conditionné par une succession de changements de statuts, c'est-à-dire d'états concernant chacun un élément. Chaque changement de statut au niveau d'un élément est susceptible de conduire à une action sur un autre élément selon un enchaînement que définit un lien, c'est-à-dire une proposition, ou formalisme, événement-condition-action ECA ou éventuellement une composition de propositions ECA.

Bien entendu, l'invention s'applique non seulement aux éléments "visibles" d'un ensemble relatif à un document multimédia structuré selon l'invention, c'est-à-dire aux éléments susceptibles d'être vus par un utilisateur, mais également aux éléments "non visibles" tels que des éléments temporels ou sonores.

Un tel élément temporel peut par exemple être utilisé pour déclencher simplement une action de type arrêt après un temps déterminé, notamment pour limiter la durée d'un affichage d'un graphisme déterminé tel que l'affichage d'un bouton pendant une période limitée. Il peut aussi être mis en oeuvre pour adapter un temps alloué pour une action déterminée à une variation de vitesse affectant les moyens assurant l'accomplissement de cette action de manière à assurer une adéquation appropriée.

Comme vu précédemment et conformément à une caractéristique essentielle de l'invention, le document multimédia comportant des éléments et des liens est décrit en un langage de description.

On rappelle qu'un langage de description est un langage informatique qui possède entre autres propriétés celle d'être facile d'accès pour un non-programmeur. Il permet à un non-spécialiste de décrire facilement son document multimédia, sans connaissance approfondie des techniques de programmation.

Le document multimédia décrit en ce langage de description peut ensuite être interprété par un module logiciel. Ce module logiciel peut se présenter sous la forme d'un navigateur, similaire à ceux qui existent aujourd'hui pour des documents multimédias non dynamiques et non interactifs.

Selon une mise en oeuvre de l'invention, le langage de description est conforme à la recommandation dite XML (eXtension *Markup* Language), issue du consortium W3C *(World-wide Web).* Cette recommandation fournit une grammaire permettant la définition de nouveaux langages de description.

Plus précisément, il est intéressant de rendre ce langage de description aussi proche que possible du langage HTML, qui est lui aussi conforme à la recommandation XML du W3C.

Cela permet, en effet, de minimiser la phase d'apprentissage des utilisateurs ayant à écrire des documents multimédias.

Le langage HTML *(HyperText Markup Language*) est défini par le consortium W3C (*World-wide-web Consortium*), et l'on peut trouver de nombreuses références bibliographiques sur le sujet sur le site Internet du consortium dont l'adresse est http://www.w3.org.

L'objet du langage HTML est la description de documents multimédias statiques, c'est-à-dire ne comportant pas d'aspects dynamiques, et à fortiori interactifs.

Selon une mise en oeuvre de l'invention, le document multimédia comporte une partie décrivant les éléments et une partie décrivant les formalismes, et les associations entre éléments et formalismes peuvent être réalisées au moyen d'identificateurs.

Ainsi, il est facile pour le module logiciel interprétant le document de ne prendre en compte que la partie statique. Ceci est particulièrement utile lorsque le système de traitement de l'information sur lequel le module logiciel est implanté, est associé à un terminal ayant des capacités limitées. C'est par exemple le cas si le terminal ne possède qu'un simple moniteur et ni clavier ni souris : les aspects interactifs ne doivent alors pas être pris en compte.

Un document multimédia conforme à l'invention peut donc être composé de deux parties distinctes, la première partie étant consacrée à la description des éléments. Cette partie est donc similaire à une description statique connue de l'état de l'art et conforme au langage HTML. Toutefois, il est préférable d'ajouter un champ identificateur à chacun des éléments afin de permettre d'associer les éléments et les liens qui seront décrit plus tard.

Un exemple d'élément pourrait être décrit comme suit :
<DIV id ="controlcomposite" x="110" y="300" width="180" height="100" background-color="#9D9DFD">
<BTN id ="playButton" x="0" y="0" icon-enabled ="buttons/play.gif" icon-disabled="buttons/playD.gif" icon-selected="buttons/playP.gif" /> <BTN id ="pauseButton" x="60" y="0" icon-enabled ="buttons/freeze.gif" icon-disabled ="buttons/freezeD.gif" icon-selected ="buttons/freezeP.gif" />
< BTN id="stopButton" x="60" y="0" icon-enabled="buttons/stop.gif" icon-disabled ="buttons/stopD.gif" icon-selected="buttons/stopP.gif" /> </DIV>

Il s'agit ici d'un élément "composé", identifié par le nom " controlComposite". Plus précisément, cet élément composé comporte trois éléments "contenus", identifiés par les noms "playButton", "pauseButton" et "stopButton".

Ainsi qu'il est connu en langage HTML, cet élément "composé" comporte plusieurs attributs. Ces attributs concernent son emplacement (x, y), son dimensionnement (height, width) et son apparence (background-color). À ces attributs connus, un attribut d'identification (id) a été ajouté, qui permet de lui donner un nom.

De la même façon, les trois éléments "contenus" (playButton, pauseButton et stopButton) comportent des attributs de positionnement (x, y), d'apparence (icon-enabled, icon-disabled et icon-selected) et d'identification (id).

La seconde partie du document multimédia est consacrée aux liens, c'est-à-dire à la partie dynamique du document multimédia. Chaque lien peut lui-même comporter 3 parties : une consacrée à l'événement, une consacrée aux conditions et une consacrée aux actions.

Un exemple de lien pourrait être décrit comme suit :
<LINK div="controlcomposite">
<SELECTION_EVENT target="playButton" value="true" />
<RUN CONDITION target="controlComposite" value="true" /> <ACTION>
<RUN target="video" />
<SET_STATUS target="pauseButton" status="selectability" value="true" />
<SET_STATUS target="stopButton" status="selectability" value="true" />
<SET_STATUS target="playButton" status="selectability" value="false" />
<SET_STATUS target="playButton" status="selection" value="true" />
</ACTION >
</LINK>

Le lien est identifié par un attribut d'identification (div) et comporte lui-même trois parties :
- la première, introduite par le mot-clef SELECTION_EVENT, correspond à l'événement de la proposition ECA correspondant au lien. Il s'agit ici de la sélection du bouton "playButton".
- la deuxième partie, introduite par le mot-clef RUN_CONDITION, correspond aux conditions du lien. Dans cet exemple, il s'agit de vérifier que l'élément "composé" regroupant les différents éléments "contenus" (c'est-à-dire les trois boutons) est bien en fonctionnement.
- Enfin, la troisième partie, introduite par le mot-clef ACTION correspond aux différentes actions du lien. Ici, il y a deux types d'actions : celle introduite par le mot-clef RUN qui consiste à lancer l'exécution d'un élément (ici, l'élément "vidéo"), et celles introduites par le mot-clef SET_STATUS qui consistent à modifier les valeurs de statuts d'éléments (ici, les statuts "selectability" et "selection" des trois boutons).

Le mot-clef "target" fait référence à la cible, ainsi que définie précédemment; tandis que le mot-clef "status" fait bien évidemment référence au statut, lui aussi précédemment défini.

Le fait d'organiser les éléments de façon hiérarchisée, c'est-à-dire à l'aide d'élément "composé" pouvant combiner des éléments "contenus", engendre un avantage intéressant. En effet, il est alors possible de reproduire cette structure sur un terminal de type téléphone mobile par une arborescence de page. Par exemple, une page sur l'écran du téléphone mobile, peut correspondre à un élément composite.

Cette application, ainsi que d'autres possibles, est aisément mise en oeuvre simplement par le module logiciel qui doit être prévu pour le système de traitement de données auquel il est associé.

## Revendications

1. Procédé pour représenter de façon dynamique un document multimédia, sur un système de traitement de données, par un module logiciel, ledit document multimédia comportant un ensemble hiérarchisé d'éléments (1, 4) comportant eux-mêmes des attributs, au moins un desdits attributs étant associé à un formalisme de type événement-condition-action, dit ECA (7, 9, 10), caractérisé en ce que ledit procédé comporte les étapes ordonnées suivantes :
• description dudit document multimédia en un langage de description,
• interprétation dudit document multimédia par ledit module logiciel lesdits formalismes ECA étant dynamiquement interprétés, afin de permettre l'évolution de la représentation dudit document multimédia par la réalisation d'actions en fonction d'événements et de conditions.

2. Procédé selon la revendication 1, caractérisé en ce que ledit document multimédia comporte une partie décrivant lesdits éléments, et une partie décrivant lesdits formalismes, et en ce que les associations entre lesdits éléments et lesdits formalismes sont réalisées par des identificateurs.

3. Procédé selon l'une des revendications précédentes, caractérisé en ce que ledit langage de description est conforme à la recommandation XML.

4. Procédé selon l'une des revendications précédentes, dans lequel l'ensemble hiérarchisé est composé d'éléments "composé" eux-mêmes composés chacun d'éléments "contenus", ces divers éléments ayant pour attributs des "statuts" qui décrivent les états des différentes parties du document et dans lequel un événement est constitué par la détection d'un changement d'une valeur de statut pour un élément qui est détecté par cet élément et qui conduit à une action assurant un changement d'apparence ou de comportement du document, lorsque est vérifiée une condition constituée par une expression logique associant des valeurs de statut relatives à différents éléments.

5. Document multimédia comportant un ensemble hiérarchisé d'éléments (1, 4) comportant eux-mêmes des attributs, au moins un desdits attributs étant associé à un formalisme de type événement-condition-action, dit ECA (7, 9, 10), caractérisé en ce que ledit document multimédia est décrit en un langage de description, et en ce que lesdits formalismes ECA sont décrit de façon à permettre l'interprétation par un module logiciel en vue de l'évolution de la représentation dudit document multimédia par la réalisation d'actions en fonction d'événements et de conditions.

6. Document multimédia selon la revendication 5, caractérisé en ce que ledit document multimédia comporte une partie décrivant lesdits éléments, et une partie décrivant lesdits formalismes, et en ce que les associations entre lesdits éléments et lesdits formalismes sont réalisées par des identificateurs.

7. Document multimédia selon l'une des revendications 5 ou 6, caractérisé en ce que ledit langage de description est conforme à la recommandation XML.

8. Document multimédia selon l'une des revendications 5 à 7, dans lequel l'ensemble hiérarchisé est composé d'éléments "composé" eux-mêmes composés chacun d'éléments "contenus", ces divers éléments ayant pour attributs des "statuts" qui décrivent les états des différentes parties du document et dans lequel un événement est constitué par la détection d'un changement d'une valeur de statut pour un élément qui est détecté par cet élément et qui conduit à une action assurant un changement d'apparence ou de comportement du document, lorsque est vérifiée une condition constituée par une expression logique associant des valeurs de statut relatives à différents éléments.
